Europäisches Patentamt

European Patent Office

Office européen des brevets

(19)

(11) Numéro de publication : **0 384 536 B1**

(12) **FASCICULE DE BREVET EUROPEEN**

(45) Date de publication du fascicule du brevet :
**19.01.94 Bulletin 94/03**

(51) Int. Cl.$^5$ : **H04L 7/033**

(21) Numéro de dépôt : **90200401.9**

(22) Date de dépôt : **15.02.90**

(54) **Procédé et dispositif de synchronisation bit dans un récepteur de transmission de données numériques.**

(30) Priorité : **21.02.89 FR 8902234**

(43) Date de publication de la demande :
**29.08.90 Bulletin 90/35**

(45) Mention de la délivrance du brevet :
**19.01.94 Bulletin 94/03**

(84) Etats contractants désignés :
**DE FR GB IT SE**

(56) Documents cités :
**EP-A- 0 200 274**
**WO-A- 88/05236**
**GB-A- 2 068 686**

(73) Titulaire : **TELECOMMUNICATIONS
RADIOELECTRIQUES ET TELEPHONIQUES
T.R.T.
88 rue Brillat Savarin
F-75640 Paris Cédex 13 (FR)**

(84) **FR**
Titulaire : **N.V. Philips' Gloeilampenfabrieken
Groenewoudseweg 1
NL-5621 BA Eindhoven (NL)**

(84) **DE GB IT SE**

(72) Inventeur : **Gelin, Benoît
Societe Civile S.P.I.D., 209 Rue de L'Université
F-75007 Paris (FR)**

(74) Mandataire : **Pyronnet, Jacques et al
Société Civile S.P.I.D. 156, Boulevard
Haussmann
F-75008 Paris (FR)**

## Description

L'invention concerne un procédé synchronisation bit, dans un récepteur, de paquets d'impulsions binaires de longueur prédéterminée courte porteurs d'information numérique et reçus de façon asynchrone relativement à l'horloge bit, selon un débit Fb, et présentant des transitions détectables entre des états binaires, comportant une première étape d'échantillonnage desdits trains d'impulsions à la fréquence n.Fb, n étant un nombre entier pair petit, une deuxième étape qui consiste à calibrer les échantillons x ainsi obtenus, ou des échantillons f déduits de ces derniers, en valeurs binaires 1 ou 0, par comparaison de chaque échantillon à un seuil prédéterminé S.

L'invention s'applique à tout type de récepteur qui reçoit de l'information numérique en provenance de lignes téléphoniques filaires ou de fibres optiques ou par voie hertzienne. La modulation utilisée pour le codage des bits peut être une modulation de phase (PSK) du type RZ ou NRZ par exemple, ou du type FSK avec ou sans conservation d'une phase continue pour le signal d'entrée du récepteur. De préférence, le procédé de synchronisation bit selon l'invention s'applique à un récepteur hertzien homodyne ou hétérodyne recevant, en transmission numérique par déplacement de fréquence FSK, des paquets (ou trames) d'impulsions binaires de longueur fixe prédéterminée courte avec un débit binaire Fb.

Un dispositif pour la mise en oeuvre du procédé précité peut être élaboré sous forme logicielle ou matérielle. Dans le premier cas, le récepteur comporte à cet effet, outre un convertisseur analogique-numérique, un microprocesseur de gestion et un microprocesseur de calcul. La réalisation matérielle quant-à elle, comporte un démodulateur de signal FSK, des moyens d'échantillonnage à la fréquence n.Fb et des moyens de calibrage des échantillons.

Le problème technique que résout l'invention consiste à obtenir par une technique numérique, le plus rapidement possible, la synchronisation bit optimale pour des paquets de bits courts, (chaque paquet appartenant à un palier de fréquence du signal reçu), de longueur typiquement inférieure à 100 bits, sans qu'une séquence préliminaire dite d'apprentissage soit nécessaire en début de paquet, tout en obtenant l'information optimale (en milieu de bit) pour tous les bits reçus de chaque paquet.

On connaît des méthodes de synchronisation bit analogiques par boucle à verrouillage de phase. Ces méthodes ne peuvent pas être utilisées, pour les applications envisagées, car la longueur des paquets serait trop courte pour avoir le temps de se synchroniser.

Parmi les méthodes numériques de récupération de rythme (de synchronisation bit) on en distingue 4 catégories principales :
- L'estimation optimale de la phase de l'horloge bit : les structures utilisées sont des transpositions directes des résultats de la théorie de l'estimation. Ces méthodes nécessitent des temps de calcul trop importants.
- L'estimation par redressement : ces méthodes font appel à des traitements non linéaires présentant une grande sensibilité vis à vis du bruit.
- L'estimation par détection des passages à zéro : cette méthode convient seulement pour des modulations du signal d'entrée qui imposent une phase continue au signal, ce qui n'est pas toujours le cas.
- L'estimation par corrélation : cette méthode est couramment utilisée pour effectuer la synchro-trame (début de paquet) mais elle n'est pas assez précise pour acquérir la synchro-bit. De plus, elle nécessite une séquence préliminaire qui diminue le débit d'information utile.

On connaît notamment du brevet US 4 189 622 un dispositif de synchronisation bit pour récepteur hertzien recevant un signal FSK, au moyen duquel le signal est échantillonné à la fréquence n.Fb, puis calibré sous forme de 1 et de 0, les échantillons calibrés adjacents sont comparés pour détecter les transitions qui apparaissent (1) ou non (0) dans le signal, les transitions sont stockées dans des compteurs qui sélectionnent chacun les transistions d'un rang donné parmi les n rangs de la période bit. Après un nombre prédéterminé de périodes bit, est sélectionné parmi ces compteurs celui qui contient le plus de transitions et l'horloge bit est éventuellement recalée par incrémentation de 1 rang selon le rang du compteur sélectionné. En ne considérant que le compteur qui contient le maximum de transitions, on s'expose à une grande sensibilité au bruit et la nécessité d'un filtrage numérique complexe, en aval, comportant de nombreux circuits, rend le système coûteux et insuffisamment rapide pour récupérer l'information optimale pour tous les bits reçus.

Les buts de la présente invention sont d'obtenir une récupération optimale du rythme binaire, rapide, peu sensible au bruit, qui s'accommode de paquets d'information binaire courts sans qu'une continuité de phase soit nécessaire pour le signal codé reçu et sans que lesdits paquets ne comportent de séquence préliminaire d'apprentissage.

Ces buts sont atteints et les inconvénients de l'art antérieur sont atténués ou supprimés grâce au fait que le procédé indiqué au premier paragraphe est caractérisé en ce qu'il comporte en outre les étapes suivantes :
a) la mémorisation sur M bits consécutifs appartenant à chaque train binaire de M.(n+1) échantillons ca-

2

librés selon une matrice des séquences [B] à n+1 lignes et M colonnes :

$$[B]=\begin{bmatrix} B1 \\ B2 \\ \vdots \\ Bn+1 \end{bmatrix} = \begin{bmatrix} f1 & fn+1 & f2n+1 & \dots & f(M-1)n+1 \\ f2 & fn+2 & f2n+2 & \dots & f(M-1)n+2 \\ \vdots & \vdots & \vdots & & \vdots \\ fn+1 & f2n+1 & f3n+1 & \dots & f(M.n)+1 \end{bmatrix}$$

b) la détermination et la mise en mémoire d'une matrice colonne [T] des transitions, à n lignes (le signe $\oplus$ désignant l'opérateur OU-exclusif) :

$$[T]=\begin{bmatrix} t1 \\ t2 \\ \vdots \\ tn \end{bmatrix} = \begin{bmatrix} (f1 \oplus f2)+(fn+1 \oplus fn+2)+\dots+(f(M-1)n+1 \oplus f(M-1)n+2) \\ (f2 \oplus f3)+(fn+2 \oplus fn+3)+\dots+(f(M-1)n+2 \oplus f(M-1)n+3) \\ \vdots \\ (fn \oplus fn+1)+(f2n \oplus f2n+1)+\dots+(fMn \oplus fMn+1) \end{bmatrix}$$

c) le calcul de deux nombres barycentres m1, m2, déduits de la matrice [T] :
m1 = P1/Q1
m2 = P2/Q2

$$P1 = \sum_{i=1}^{n/2} i.ti \qquad P2 = \sum_{i=\frac{n}{2}+1}^{n} i.ti$$

$$Q1 = \sum_{i=1}^{n/2} ti \qquad Q2 = \sum_{i=\frac{n}{2}+1}^{n} ti$$

i variant de 1 à n,
d) le calcul d'un nombre m déduit des nombres m1, m2 et de la matrice [T] :
m = m1.Q1+m2.Q2/Q1+Q2        si : m2-m1<n/2
m = (m1+n).Q1+m2.Q2/Q1+Q2        si : m2-m1$\geq$n/2
e) le calcul d'un nombre entier m' déduit du nombre m (la notation E(.) signifiant : partie entière de ...) :
m' = E(m+0,5)
f) le calcul d'un nombre entier j compris entre 1 et n, déduit des nombres m' et n :
j = (m' - n/2)modulo n
g) le choix de la séquence Bj comme séquence optimale desdits M bits de chaque paquet, respectivement sous-paquet, d'impulsions binaires reçu.

On notera qu'il existe une incertitude temporelle sur la suite des séquences B1, B2,..., Bn parmi lesquelles on cherche à déterminer, en tant que séquence optimale, celle qui est la plus proche du milieu de bit. Cette incertitude se traduit, au niveau de la matrice des transitions [T] par une incertitude de rotation sur les lignes réduites chacune à un élément, t1, ..., tn. Deux cas principaux peuvent se présenter : soit une forte majorité de transitions est relative à un seul front montant, respectivement descendant, de bit, auquel cas les éléments qui comportent le plus de transitions apparaissent au milieu de la matrice [T], soit les transitions sont partagées sur deux fronts, montant et descendant de bit, auquel cas les éléments qui comportent le plus de transitions apparaissent disjoints aux deux extrémités de la matrice [T]. Le premier cas est celui qui correspond à m2-m1<n/2, pour lequel un calcul de barycentre simple est effectué et pour lequel le nombre m calculé est proche de n/2. Pour le deuxième cas, on obtient : m2-m1$\geq$n/2 et le calcul de barycentre est effectué sur une matrice déduite de la matrice [T] après rotation des lignes d'une moitié de cycle, ce qui a pour effet de regrouper les transitions sensiblement autour du rang n en faisant coïncider les impulsions relatives à un front d'impulsions montant avec celles relatives à un front descendant. Le nombre m calculé est alors, comme il convient, proche de n.

Le nombre n, de préférence inférieur à 10, est choisi par exemple égal à 4, 6 ou 8.

Pour des valeurs de M supérieures à 16, on choisit de préférence, pour la mise en oeuvre du procédé précité une solution logicielle selon laquelle un microprocesseur de calcul est programmé d'une part pour effectuer le calibrage d'échantillons en valeurs binaires 1 ou 0, pour effectuer les étapes a) à g) précitées et pour fournir sur une sortie la séquence optimale des paquets de M bits selon le débit Fb.

Selon une autre solution logicielle pour la mise en oeuvre de l'invention, pour des paquets longs de l'ordre de plusieurs dizaines de bits, chaque paquet est traité en L tranches (sous-paquets) de longueur fixe réduite (M = 4 par exemple) et l'algorithme défini par les étapes du procédé indiquées ci-dessus est complélé de façon à opérer de façon itérative, d'une tranche de bits à la suivante. Cette dernière réalisation logicielle est remarquable en ce que la séquence $Bj_k$ relative au sous-paquet de rang k, k variant chronologiquement de 1 à L pour chaque sous-paquet, est obtenue en effectuant les étapes suivantes :

h) le calcul et la mise en mémoire du nombre $m_k$ :

$$m_k = \frac{(k-1)m_{k-1} + m_{(k)}}{k}$$

$m_{(k)}$ : valeur de m pour le sous-paquet de rang k obtenu par application desdites étapes a) à d),

i) le calcul de $j_k$ en appliquant lesdites étapes e) et f) où l'on substitue au nombre m le nombre $m_k$,

j) le choix de la séquence $Bj_k$ comme séquence optimale des M bits du sous-paquet de rang k, pour chaque valeur de k.

Pour les paquets de bits de longueur très courte typiquement inférieure ou égale à 16 temps de bit, une réalisation matérielle de l'invention, selon laquellel M est égal au nombre de bits de chaque paquet, et comportant en cascade :

- un démodulateur de signal numérique par déplacement de fréquence (FSK),
- des moyens d'échantillonnage à la fréquence n.Fb pour fournir des échantillons f représentatifs de la fréquence caractéristique des bits reçus 1, respectivement 0,
- et des moyens de calibrage pour calibrer les échantillons f en valeurs binaires 1, ou 0, est caractérisée en ce qu'elle comporte en outre :
- n+1 registres à décalage R1, R2, ..., Rn, Rn+1 dont les n premiers ont une longueur de M+1 emplacements de bit pour recevoir lesdites n séquences B1, B2, ..., Bn d'échantillons calibrés et le dernier une longueur au moins égale à un bit,
- n portes OU-exclusif à deux entrées qui reçoivent deux par deux les échantillons d'entrée desdits n+1 registres à décalage pour chaque paire de registres adjacents,
- n compteurs qui reçoivent chacun le signal de sortie de chacune des n portes OU-exclusif,
- une mémoire à accès aléatoire adressée par le contenu des compteurs, comportant n sorties D1, D2, ..., Dn, et préalablement programmée en tant que circuit spécifique de façon telle que chaque configuration d'adressage s'identifiant à ladite matrice [T] des transitions adresse un emplacement qui contient le nombre j préalablement calculé selon lesdites étapes c) à f) et de façon que, en conséquence du contenu spécifique de cet emplacement, seule la sortie Dj soit activée lors d'une commande de lecture,
- des moyens d'extraction pour extraire, en conséquence de l'activation de la sortie Dj, à cadence rapide pendant le temps de garde qui sépare deux paquets consécutifs de M bits, les bits contenus dans le registre Rj en tant que séquence optimale desdits M bits de chaque paquet d'impulsions binaires reçu.

Ce dispositif met en oeuvre l'algorithme de base de l'invention. Le nombre d'emplacements mémoire de la mémoire à accès aléatoire est supérieur au nombre de configurations réellement possibles de la matrice [T]. Pour n = 4 et M = 16, cette mémoire ROM est adressée par 16 conducteurs et comporte 64K emplacements mémoire de 4 ou 8 bits. Chaque emplacement mémoire contient un nombre égal à 1, 2, 3 ou 4 s'identifiant au nombre j optimal relativement à l'adresse correspondante qui s'identifie quant-à elle à la matrice [T] des transitions. Le temps de garde, supérieur à un temps de bit, qui sépare les paquets, est suffisant pour vider sélectivement le registre de rang j porteur de la meilleure information parmi les n registres, à une cadence par exemple égale à 32 x n x Fb.

La description qui suit, en regard des dessins annexés, le tout donné à titre d'exemple, fera bien comprendre comment l'invention peut être réalisée.

La figure 1 est le schéma d'un récepteur super-hétérodyne connu, muni d'un microprocesseur de gestion et d'un microprocesseur de calcul.

La figure 2 est l'organigramme de programmation du microprocesseur de calcul pour la détermination de la séquence optimale Bj pour M bits d'information successifs, selon l'invention.

La figure 3 est le schéma synoptique d'un dispositif de synchronisation bit, pour un signal FSK, selon l'invention.

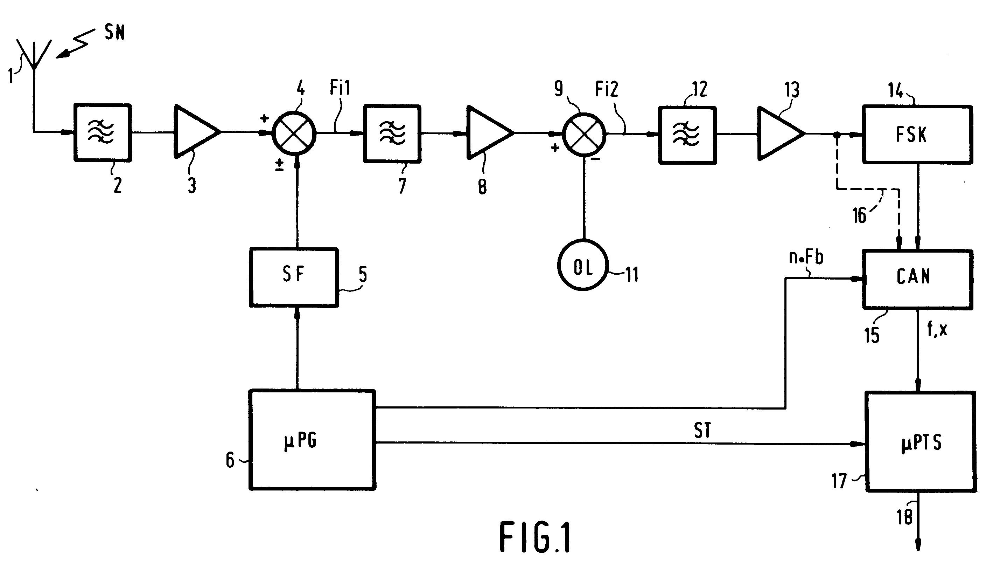

Le récepteur hertzien de la figure 1 est à double changement de fréquence. Il reçoit sur une antenne 1 un signal numérique SN modulé en phase (PSK) ou en fréquence (FSK). De préférence, le signal SN est un signal FSK à sauts de fréquence, à phase discontinue ; à chaque palier de fréquence, un paquet d'information binaire de longueur fixe, courte, est émis, tous les bits du paquet étant porteurs d'information utile. La longueur de paquet est typiquement inférieure à 100 bits. Un tel signal réunit les conditions les plus difficiles pour la récupération de l'horloge bit. Le signal reçu en 1 est transmis, par l'intermédiaire d'un filtre passe-bande 2 et d'un amplificateur 3 à un mélangeur 4 qui reçoit sur une deuxième entrée un signal en provenance d'un synthétiseur de fréquence 5 (SF) commandé lui-même par un microprocesseur de gestion μPG, 6, par exemple du type 6809 ou 68 HC 11 de la société américaine MOTOROLA. Selon le type d'application envisagé, le mélangeur 4 fournit à sa sortie un signal additif ou soustractif à fréquence centrale intermédiaire constante Fi1. Après filtrage à travers un filtre passe-bande 7 et amplification à travers un amplificateur 8, le signal Fi1 est soumis dans un mélangeur 9 dit mélangeur final à un battement soustractif avec le signal d'oscillation locale issu d'un oscillateur 11 (OL). Il en résulte en sortie du mélangeur 9 un deuxième signal à fréquence centrale intermédiaire constante Fi2 typiquement comprise entre quelques centaines de hertz et quelques centaines de kilohertz. Les fréquences représentatives des bits d'information 1, respectivement 0 étant notées F1 et F0, on considère par exemple une modulation du signal telle que, F1 et F0 étant disposées symétriquement de part et d'autre de leur fréquence porteuse (de Fi1 et de Fi2 notamment), on ait :

$$F1 - F0 = 0,5\ Fb$$

Fb étant le débit binaire.

Le signal Fi2 est encore filtré et amplifié à travers un filtre passe-bande 12 et un amplificateur 13. L'amplificateur 13 est de préférence à gain très élevé et peut comporter à sa sortie des moyens de filtrage (non représentés) de façon à adapter le signal aux organes de traitement numérique situés en aval. Ces organes de traitement numérique sont par exemple constitués par un démodulateur FSK 14 suivi d'un convertisseur analogique-numérique CAN 15 qui échantillonne, selon une première étape, le signal qu'il reçoit à la fréquence n.Fb et fournit dans ce cas des échantillons f représentatifs des fréquences F1 et F0. Le nombre n est un nombre entier pair, petit, par exemple égal à 4, 6 ou 8. Selon une variante, le signal analogique de sortie de la chaîne analogique est transmis directement au CAN 15, ce qui est représenté par le trait interrompu 16, auquel cas le CAN fournit des échantillons x. Enrtre échantillons courants f, x, indicés par q, il existe la dualité :

$$x_q = \sin (2\Pi f q \times \frac{q}{n.Fb}) \quad (1)$$

Le signal d'échantillonnage à la fréquence n.Fb est par exemple fourni par le microprocesseur de gestion 6. Les échantillons f ou x sont ensuite fournis à un microprocesseur de calcul μPTS 17. En l'absence du démodulateur 14, le microprocesseur 17 effectue de façon connue la transformation $x \rightarrow f$ qu'exprime la relation (1) ci-dessus.

Dans une deuxième étape, le microprocesseur effectue une démodulation d'enveloppe et calibre, toujours de façon connue, les échantillons f en échantillons binaires 1 ou 0, notés fl, après comparaison à un seuil adéquat S représentatif de la valeur moyenne des échantillons f.

Le microprocesseur 17, par exemple du type TMS 320 C25 de la société américaine Texas Instruments, reçoit aussi la synchronisation de trame ST, c'est-à-dire l'horloge paquet en provenance du microprocesseur de gestion 6.

Une programmation principale et une programmation annexe, à titre de variante, du microprocesseur 17 sont envisagées pour fournir, sur une sortie 18 de ce dernier, les séquences optimales de bits régénérés en réponse aux bits d'information reçus, le but recherché étant de choisir comme étant représentatif de chaque bit reçu l'échantillon le plus proche du milieu du bit reçu considéré.

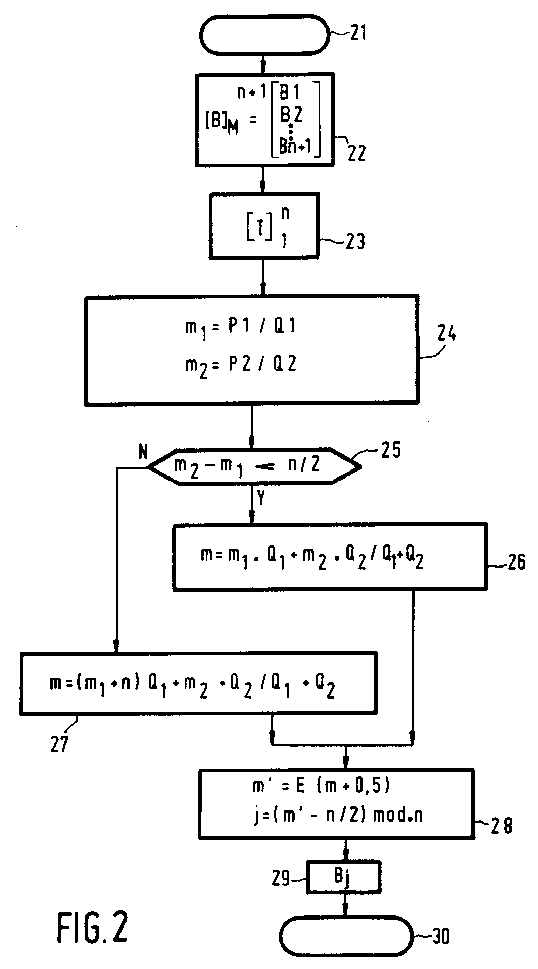

La programmation principale est représentée par l'organigramme de la figure 2. Après le bloc de début 21, au bloc 22, il est constitué une matrice des séquences [B] à n+1 lignes (à raison d'une séquence par ligne) et M colonne, M représentant un certain nombre de bits consécutifs d'un paquet et éventuellement tous les bits du paquet lorsque ce dernier est de faible longueur. La matrice des séquences consiste en une mise en mémoire, dans une mémoire des séquences, sous la forme particulière suivante :

$$[B] = \begin{bmatrix} B1 \\ B2 \\ \vdots \\ Bn \\ Bn{+}1 \end{bmatrix} = \begin{bmatrix} f1 & fn{+}1 & \ldots & f(M{-}1)n{+}1 \\ f2 & fn{+}2 & \ldots & f(M{-}1)n{+}2 \\ \vdots & \vdots & & \vdots \\ fn & f2n & \ldots & Mn \\ fn{+}1 & f2n{+}1 & \ldots & fMn{+}1 \end{bmatrix}$$

L'adressage en lecture de la mémoire des séquences est conçu pour extraire en séquence selon l'ordre chronologique les éléments d'une seule ligne.

De la matrice [B] est déduite et mémorisée dans une mémoire des transitions, au bloc 23, une matrice [T] dite matrice des transitions, à une colonne et n lignes :

$$[T] = \begin{bmatrix} t1 \\ t2 \\ \vdots \\ tn \end{bmatrix} = \begin{bmatrix} (f1 \oplus f2)+(fn{+}1 \oplus fn{+}2)+\ldots+(f(M{-}1)n{+}1 \oplus f(M{-}1)n{+}2) \\ (f2 \oplus f3)+(fn{+}2 \oplus fn{+}3)+\ldots+(f(M{-}1)n{+}2 \oplus f(M{-}1)n{+}3) \\ \vdots \\ (fn \oplus fn{+}1)+(f2n \oplus f2n{+}1)+\ldots+(fMn \oplus fMn{+}1) \end{bmatrix}$$

le signe $\oplus$ désignant l'opérateur OU-exclusif. Chaque élément-ligne, t1 par exemple, de la matrice t est un nombre entier compris entre 0 et M, représentatif du nombre de transistions détectées du signal reçu pendant M temps de bit, ces transitions étant détectées avec un décalage $\tau1$ inconnu, toujours le même par rapport à l'instant qui marque le début d'un temps de bit reçu. Au bloc 24 est ensuite effectué un calcul de barycentre qui porte sur chaque moitié de la matrice T, à savoir le barycentre supérieur m1 pour la moitié supérieure de [T] et le barycentre inférieur m2 pour la moitié inférieure de [T].

En notant :

$$P1 = \sum_{i=1}^{n/2} i.ti \qquad P2 = \sum_{i=\frac{n}{2}+1}^{n} i.ti$$

$$Q1 = \sum_{i=1}^{n/2} ti \qquad Q2 = \sum_{i=\frac{n}{2}+1}^{n} ti$$

i, indice de lignes, variant de 1 à n, il vient :

m1 = P1/Q1

m2 = P2/Q2

On effectue ensuite, au bloc 25 le test suivant :

m2 - m1<n/2

Dans l'affirmative (Y), ce qui signifie que la majorité des transitions est groupée au centre de la matrice, autrement dit que la transition des bits est proche du rang n/2, on termine le calcul de barycentre simple, au bloc 26 :

m = m1.Q1 + m2.Q2/Q1+Q2

On notera que les nombres m1, m2, m ne sont généralement par des nombres entiers. Le barycentre m est alors un pointeur de la séquence la plus proche de l'instant de transition qui sépare un temps de bit du suivant.

Si par contre : m2-m1≧n/2 (N en sortie du bloc 25), il faut considérer que les transitions sont séparées en deux parties disjointes, ceci indiquant que des transitions relatives à la fois au début et à la fin d'un temps de bit ont été détectées dans la matrice T. Dans ces conditions, le calcul de barycentre effectué au bloc 26 est inapplicable car on obtiendrait un nombre m proche du milieu de bit alors qu'il doit, dans tous les cas, indiquer la fin du temps de bit. On effectue alors le calcul indiqué au bloc 27 :

m = (m1+n)Q1 + m2.Q2/Q1+Q2

Ceci revient, modulo n, à faire subir à la matrice [T] une rotation portant sur la moitié des lignes et à obtenir une configuration correcte équivalente à celle qui correspond au bloc 26.

Après le bloc 26 ou 27 on effectue, au bloc 28, un calcul d'arrondi consistant à substituer à m le nobmre entier le plus proche :

m' = E(m+0,5)

la notation E(.) signifiant : partie entière de ..., puis on calcule le rang j de la séquence qui coïncide au mieux avec le milieu de bit :

j = (m'-n/2)mod.n

Au bloc suivant, 29, la séquence Bj est extraite de la mémoire des séquences, comme indiqué plus haut, de préférence au rythme Fb.

Le bloc 30 marque la fin du programme, qui se répète ensuite pour les M bits suivants. La programmation décrite ci-dessus suppose l'utilisation d'autres mémoires pour permettre le stockage des échantillons calibrés courants puis leur mise en mémoire sous forme de séquences, de façon à pouvoir, en alternance, charger une mémoire des séquences pendant qu'une autre mémoire des séquences est traitée, puis que sa séquence Bj sélectionnée est lue, ce qui est à la portée de l'informaticien moyen.

Lorsque la longueur des paquets, tout en restant courte est de l'ordre de plusieurs dizaines de bits il est avantageux, tout en conservant la solution logicielle décrite ci-dessus, de donner à M une valeur très faible, par exemple M = 4, et de procéder par itération. Cette variante, non représentée, consiste à effectuer les opérations suivantes, pour la régénération d'un paquet (une trame) de bits reçus :

Les 4 premiers bits sont traités comme décrit ci-dessus en référence à la figure 2 et le nombre m correspondant, $m_{(1)}$ est mémorisé. Pour la deuxième tanche de 4 bits on effectue les opérations des blocs 21 à 27 qui fournissent un nombre $m_{(2)}$. Le nombre m, noté $m_2$, retenu pour la deuxième tranche de 4 bits est à nouveau obtenu par un calcul de barycentre :

$$m_2 = \frac{m_{(1)} + m_{(2)}}{2}$$

Le nombre $m_2$ est mémorisé, puis on effectue sur $m_2$ les opérations des blocs 28 et 29.

Pour chaque tranche de 4 bits qui suit, les opérations décrites pour la deuxième tranche sont réitérées. Pour la tranche d'ordre k, on obtient :

$$m_k = \frac{(k-1)m_{k-1} + m_{(k)}}{k}$$

$m_{(k)}$ étant la valeur de m pour le sous-paquet de rang k obtenue par application des opérations des blocs 21 à 27, figure 2.

L'opération se répète jusqu'à la dernière tranche, L, de chaque paquet.

En procédant de cette façon, on obtient une valeur de j qui va s'améliorant du début vers la fin du paquet.

Selon cette variante, en opérant sur des paquets de 100 bits divisés en 25 tranches de 4 bits (M = 4, L = 25, n = 6) on obtient les résultats résumés dans le tableau suivant :

## TABLEAU

| sans bruit | | avec bruit : | | | | | |
|---|---|---|---|---|---|---|---|
| | | Energie bit/densité de puissance de bruit | | | | | |
| | | 10,3 dB | | 7,8 dB | | 5,0 dB | |
| k | $\frac{m}{k}$ | k | $\frac{m}{k}$ | k | $\frac{m}{k}$ | k | $\frac{m}{k}$ |
| 1 | 6,50 | 1 | 5,50 | 1 | 5,25 | 1 | 6 |
| · | | · | | · | | · | |
| · | | · | | · | | · | |
| 10 | 6,11 | 10 | 5,76 | 10 | 6,24 | 10 | 6,45 |
| · | | · | | · | | · | |
| · | | · | | · | | · | |
| 20 | 6,01 | 20 | 5,88 | 20 | 6,17 | 20 | 6,72 |
| · | | · | | · | | · | |
| · | | · | | · | | · | |
| 25 | 6 | 25 | 5,98 | 25 | 6,26 | 25 | 6,66 |
| j = 3 | | j = 3 | | j = 3 | | j = 4 | |

| j | Probabilité d'erreurs en nombre de bits, pour 1000 bits (10 paquets) émis | | | |
|---|---|---|---|---|
| 1 | 0 | 39 | 90 | 122 |
| 2 | 0 | 5 | 16 | 85 |
| 3 | → 0 | → 0 | → 14 | 75 |
| 4 | 0 | 2 | 24 | → 82 |
| 5 | 0 | 36 | 72 | 160 |
| 6 | 243 | 252 | 259 | 303 |

Les flèches au bas du tableau indiquent la valeur de j sélectionnée à chaque colonne.

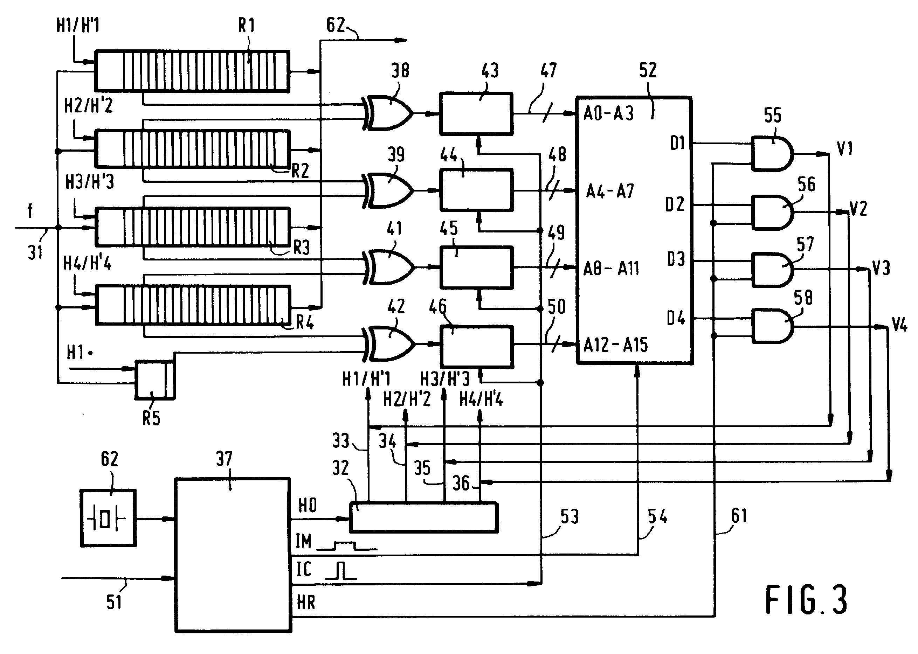

Le dispositif de la figure 3 est une réalisation matérielle de l'invention qui effectue la synchronisation bit à partir d'opérateurs logiques, de registres à décalage et d'une mémoire non volatile. Toutes ces fonctions peuvent être intégrées dans un seul circuit spécifique. Ceci permet alors d'augmenter la vitesse de fonctionnement et de réduire d'une façon significative la consommation et l'encombrement du dispositif. Le dispositif de la figure 3 s'applique de préférence à des paquets de longueur très courte, typiquement inférieure à 32 bits, 16 bits par exemple. Dans ce cas, c'est l'algorithme de la figure 2 qui s'applique, avec : M = 16. Dans l'application envisagée, on a aussi choisi : n = 4.

Le circuit de la figure 3 reçoit, sur une entrée 31 des échantillons f normalisés (calibrés) à 0 ou à 1 après traitement dans un démodulateur FSK. L'entrée 31 est reliée à une batterie de 5 registres à décalage R1, R2, R3, R4, R5 dont les 4 premiers ont une longueur de 17 emplacements et le dernier une longueur au moins égale à 1. Les échantillons f sont démultiplexés en utilisant 4 horloges H1, H2, H3 et H4. Ces horloges sont engendrées par un décodeur 1/4, 32, sur des conducteurs de sortie respectifs 33, 34, 35, 36, à partir du signal d'échantillonnage à la fréquence : H0 = n.Fb, lui-même engendré par un séquenceur 37. Les horloges H1 à H4 sont décalées dans le temps d'une période d'échantillonnage : 1/H0 et leur fréquence est égale à Fb. On notera que la même horloge, H1, est fournie à R1 et à R5. Les registres R1 à R4 constituent, lorsqu'ils sont pleins, les lignes-séquences B1 à Bn (B4) de la matrice [B]. La séquence B5 qui correspond, en dynamique, à la ligne n+1 de [B] est une réplique de B1, décalée d'un temps de bit, soit : 4/H0. La détection des transitions entre deux séquences consécutives est effectuée, paire d'éléments par paire d'éléments par des portes OU-exclusif, 38, 39, 41, 42 respectivement, dont les deux entrées sont reliées à deux sorties parallèles des registres à décalage ayant même rang (sorties du deuxième emplacement, par exemple), sauf pour le registre R5 (sortie du premier emplacement). La sortie de chaque porte 38 à 42 est reliée à un compteur 43, 44, 45, 46, qui s'incrémente d'une unité pour chaque transition détectée. Le nombre de bits de sortie des compteurs 43 à 46 est déterminé par le nombre de transitions possibles sur un message de 16 bits. Les compteurs 43 à 46 s'identifient, à la fin de chaque paquet de 16 bits, à la matrice des transitions [T] et ils fournissent, sur une sortie multiple, en l'occurrence à 4 conducteurs, 47, 48, 49, 50, une configuration d'adressage pour une mémoire non volatile 52. On notera que le nombre maximum de bits de sortie de chaque compteur, qui conditionne le nombre de conducteurs de sortie, est déterminé par le nombre maximal de transitions possibles sur un message de 16 bits et, plus généralement, de M bits. Chaque emplacement de la mémoire 52 contient à demeure un numéro de séquence à sélectionner parmi le contenu des registres R1 à R4. Avant son inscription en mémoire, ce numéro (j) est lui-même déterminé par application de l'algorithme, défini par l'organigramme de la figure 2, à la configuration d'adressage de l'emplacement mémoire considéré. Cette inscription est effectuée pour toutes les configurations d'adressage possibles ce qui, dans l'exemple entraîne l'utilisation d'une mémoire à $2^{16}$ (64K) emplacements et, plus généralement, $2^M$ emplacements. On choisit par exemple une mémoire ROM à 64K octets. Le numéro (le rang) j de séquence optimale ainsi sélectionné est ensuite utilisé pour extraire les bits du registre de même rang, ce qui est à la portée de l'électronicien moyen. On décrit une solution préférée pour l'extraction des bits de l'un des registres R1 à R4 : le séquenceur 37, qui reçoit sur une entrée 51 la synchronisation de trame, par exemple en provenance du microprocesseur de gestion 6 de la figure 1, transmet aux compteurs, juste après la fin du paquet (de la trame), par un conducteur 53, une impulsion de courte durée IC qui provoque la transmission de leur contenu codé en binaire sur leurs sorties d'adressage 47 à 50 et leur remise à zéro. Une impulsion IM de courte durée, de l'ordre d'un temps de bit, est alors transmise sur un conducteur 54 du séquenceur 37 à une entrée de validation de sortie de la mémoire 52. Pendant toute la durée de l'impulsion IM, le contenu j de l'emplacement mémoire sélectionné par l'adressage sur les conducteurs 47 à 50 est lu de la façon suivante : la mémoire 52 comporte n sorties D1 à Dn et parmi ces sorties, seule la sortie Dj est activée, c'est-à-dire mise à 1 les autres sorties étant maintenues inactives, c'est-à-dire à 0. Chacune de ces sorties est reliée à une porte ET, 55, 56, 57, 58 sur la figure 3 qui reçoit sur une deuxième entrée un signal d'horloge rapide HR, en provenance du séquenceur 37, fournissant sur un conducteur 61, M coups d'horloge pendant la durée de l'impulsion IM. Pendant cette durée de IM, l'une des sorties V1, V2, V3, V4, des portes ET 55 à 58, la sortie Vj et seulement celle-là, fournit un signal d'horloge rapide H'j qui est transmis au registre correspondant Rj, les sorties V1, ..., Vn autres que Vj et reliées aux entrées d'horloge des registres R1, ..., Rn correspondants restant à 0. Les 16 (M) derniers emplacements du registre à décalage Rj sont ainsi lus dans l'ordre chronologique d'arrivée sur un conducteur de sortie série commun 62, à la cadence rapide de l'horloge HR dont la fréquence est par exemple égale à celle du générateur d'horloge de référence 62 : Href = 32 × n.Fb. Le changement d'horloge sur les conducteurs 33 à 36 est effectué moyennant par exemple la mise en état de haute impédance, pendant la durée d'impulsion IM, du décodeur 32 ou bien par le fait que ces conducteurs sont, pendant cette durée, reliés à des collecteurs de transistors ouverts, l'horloge H0 n'étant pas transmise entre deux trames consécutives. La durée qui s'écoule entre le début de l'impulsion IC et la fin de l'impulsion IM est comprise dans le temps de garde, supérieur à un temps de bit, qui sépare deux paquets consécutifs.

## Revendications

1. Procédé de synchronisation bit, dans un récepteur, de paquets d'impulsions binaires de longueur prédéterminée courte porteurs d'information numérique et reçus de façon asynchrone relativement à l'horloge bit, selon un débit Fb, et présentant des transitions détectables entre des états binaires, comportant une première étape d'échantillonnage desdits trains d'impulsions à la fréquence n.Fb, n étant un nombre entier pair petit, une deuxième étape qui consiste à calibrer les échantillons x ainsi obtenus, ou des échantilons f déduits de ces derniers, en valeurs binaires 1 ou 0, par comparaison de chaque échantillon à un seuil prédéterminé S, caractérisé en ce qu'il comporte en outre les étapes suivantes :
   a) la mémorisation sur M bits consécutifs appartenant à chaque train binaire de M.(n+1) échantillons calibrés selon un tableau matriciel des séquences [B] à n+1 lignes et M colonnes :

$$[B] = \begin{bmatrix} B1 \\ B2 \\ \cdot \\ \cdot \\ Bn{+}1 \end{bmatrix} = \begin{bmatrix} f1 & fn{+}1 & f2n{+}1 & \ldots & f(M{-}1)n{+}1 \\ f2 & fn{+}2 & f2n{+}2 & \ldots & f(M{-}1)n{+}2 \\ \cdot & \cdot & \cdot & & \cdot \\ fn{+}1 & f2n{+}1 & f3n{+}1 & \ldots & f(M.n){+}1 \end{bmatrix}$$

b) la détermination et la mise en mémoire d'une tableau matriciel colonne [T] des transitions, à n lignes (le signe $\oplus$ désignant l'opérateur OU-exclusif) :

$$[T] = \begin{bmatrix} t1 \\ t2 \\ \cdot \\ \cdot \\ tn \end{bmatrix} = \begin{bmatrix} (f1 \oplus f2) + (fn{+}1 \oplus fn{+}2) + \ldots + (f(M{-}1)n{+}1 \oplus f(M{-}1)n{+}2) \\ (f2 \oplus f3) + (fn{+}2 \oplus fn{+}3) + \ldots + (f(M{-}1)n{+}2 \oplus f(M{-}1)n{+}3) \\ \cdot \\ (fn \oplus fn{+}1) + (f2n \oplus f2n{+}1) + \ldots + (fMn \oplus fMn{+}1) \end{bmatrix}$$

c) la détermination de deux nombres barycentres m1, m2, déduits du tableau matriciel [T] :
m1 = P1/Q1
m2 = P2/Q2

$$P1 = \sum_{i=1}^{n/2} i.ti \qquad P2 = \sum_{i=\frac{n}{2}+1}^{n} i.ti$$

$$Q1 = \sum_{i=1}^{n/2} ti \qquad Q2 = \sum_{i=\frac{n}{2}+1}^{n} ti$$

i variant de 1 à n,
d) la détermination d'un nombre m déduit des nombres m1, m2 et du tableau matriciel [T] :
m = m1.Q1+m2.Q2/Q1+Q2 $\qquad$ si : m2-m1<n/2
m = (m1+n).Q1+m2.Q2/Q1+Q2 $\qquad$ si : m2-m1$\geqq$n/2
e) la détermination d'un nombre entier m' déduit du nombre m (la notation E(.) signifiant : partie entière de ...) :
m' = E(m+0,5)
f) la détermination d'un nombre entier j compris entre 1 et n, déduit des nombres m' et n :
j = (m' - n/2)modulo n
g) la sélection de la séquence Bj comme séquence optimale de synchronisation bit desdits M bits de chaque paquet, respectivement sous-paquet, d'impulsions binaires reçu.

2. Procédé de synchronisation bit selon la revendication 1, caractérisé en ce que le nombre M est un sous multiple du nombre de bits constituant la longueur d'un paquet d'impulsions binaires, ce dernier étant constitué de L sous-paquets successifs de longueur M, que la séquence $Bj_k$ relative au sous-paquet de rang k, k variant chronologiquement de 1 à L pour chaque sous-paquet, est obtenue de façon itérative en effectuant les étapes suivantes :
h) la détermination et la mise en mémoire du nombre $m_k$ :

$$m_k = \frac{(k-1)m_{k-1} + m_{(k)}}{k}$$

$m_{(k)}$ : valeur de m pour le sous-paquet de rang k obtenu par application desdites étapes a) à d),
i) la détermination de $j_k$ en appliquant lesdites étapes e) et f) où l'on substitue au nombre m le nombre $m_k$,
j) la sélection de la séquence $Bj_k$ comme séquence optimale de synchronisation bit des M bits du sous-paquet de rang k, pour chaque valeur de k.

**3.** Procédé de synchronisation bit selon la revendication 1 ou 2 dans un récepteur homodyne ou hétérodyne recevant, en transmission numérique par déplacement de fréquence (FSK), des paquets (ou trames) d'impulsions binaires de longueur fixe prédéterminée courte avec un débit Fb, selon lequel le signal à fréquence intermédiaire Fi obtenu en sortie du mélangeur final est, selon ladite première étape, échantillonné à la fréquence n.Fb de façon à fournir des échantillons x, après quoi lesdits échantillons x(f) sont transformés en leur fonction inverse instantanée f(x) représentative de la fréquence caractéristique des bits reçus, 1, respectivement 0, puis lesdits échantillons f(x) sont calibrés en valeurs binaires 1, ou 0.

**4.** Dispositif de synchronisation bit dans un récepteur pour la mise en oeuvre du procédé selon les revendications 1 et 3 prises ensemble, M étant égal au nombre de bits de chaque paquet d'impulsions binaires reçu, ledit dispositif comportant un convertisseur analogique-numérique pour fournir lesdits échantillons x à ladite fréquence n.Fb, dispositif caractérisé en ce qu'il comporte un microprocesseur de gestion et un microprocesseur de calcul, que le microprocesseur de gestion est programmé pour fournir au microprocesseur de calcul un signal de synchronisation de trame et que ledit microprocesseur de calcul est programmé pour effectuer ladite deuxième étape aboutissant à la transformation d'échantillons en valeurs binaires calibrées 1 ou 0, pour effectuer lesdites étapes a) à g), et pour fournir sur une sortie la séquence optimale desdits M bits de chaque paquet d'impulsions binaires, selon le débit Fb.

**5.** Dispositif de synchronisation bit dans un récepteur pour la mise en oeuvre du procédé selon les revendications 1, 2 et 3 prises ensemble, M étant égal au nombre de bits de chacun desdits L sous-paquets, ledit dispositif comportant un convertisseur analogique-numérique pour fournir lesdits échantillons x à la fréquence n.Fb, dispositif caractérisé en ce qu'il comporte un microprocesseur de gestion et un microprocesseur de calcul, que le microprocesseur de gestion est programmé pour fournir au microprocesseur de calcul un signal de synchronisation de trame, et que ledit microprocesseur de calcul est programmé pour effectuer ladite première étape de calibrage d'échantillons en valeurs binaires 1 ou 0, pour effectuer, pour chaque sous-paquet, lesdites étapes a) à d), h) à j), et pour fournir sur une sortie la séquence optimale desdits M bits de chaque sous-paquet d'impulsions binaires, selon le débit Fb.

**6.** Dispositif de synchronisation bit dans un récepteur pour la mise en oeuvre du procédé selon les revendications 1 et 3 prises ensemble, M étant égal au nombre de bits de chaque paquet d'impulsions binaires reçu, ledit dispositif comportant en cascade :
- un démodulateur de signal numérique par déplacement de fréquence (FSK),
- des moyens d'échantillonnage à la fréquence n.Fb pour fournir des échantillons f représentatifs de la fréquence caractéristique des bits reçus 1, respectivement 0,
- et des moyens de calibrage pour calibrer les échantillons f en valeurs binaires 1, ou 0, caractérisé en ce qu'il comporte en outre :
- n+1 registres à décalage R1, R2, ..., Rn, Rn+1 dont les n premiers ont une longueur de M+1 emplacements de bit pour recevoir lesdites n séquences B1, B2, ..., Bn d'échantillons calibrés et le dernier une longueur au moins égale à un bit
- n portes OU-exclusif à deux entrées qui reçoivent deux par deux les échantillons d'entrée desdits n+1 registres à décalage pour chaque paire de registres adjacents,
- n compteurs qui reçoivent chacun le signal de sortie de chacune des n portes OU-exclusif,
- une mémoire à accès aléatoire adressée par le contenu des compteurs, comportant n sorties D1, D2, ..., Dn, et préalablement programmée en tant que circuit spécifique de façon telle que chaque configuration d'adressage s'identifiant à ladite matrice [T] des transitions adresse un emplacement qui contient le nombre j préalablement calculé selon lesdites étapes c) à f) et de façon que, en conséquence du contenu spécifique de cet emplacement, seule la sortie Dj soit activée lors d'une commande de lecture,
- des moyens d'extraction pour extraire, en conséquence de l'activation de la sortie Dj, à cadence rapide pendant le temps de garde qui sépare deux paquets consécutifs de M bits, les bits contenus dans le registre Rj en tant que séquence optimale desdits M bits de chaque paquet d'impulsions binaires reçu.

**Patentansprüche**

**1.** Bit-Synchronisationsverfahren in einem Empfänger für binäre Impulspakete vorgegebener, kurzer Länge, die digitale Informationen tragen und die asynchron zum Bit-Taktgeber mit der Datenrate fB eintreffen und erkennbare Wechsel zwischen ihren Binärzuständen aufweisen, wobei das Verfahren einen ersten Verfahrensschritt aufweist für das Abtasten ('Sampling') der genannten Impulspakete mit der Frequenz n•Fb, wobei n eine Meine, ganze Zahl darstellt, sowie einen zweiten Schritt für die Aufbereitung der so erhaltenen Abtastwerte x oder der aus diesen abgeleiteten Abstastwerte f in Binär-Werte 0 oder 1, die durch Vergleich mit einer vorgegebenen Schwelle S erzeugt werden, <u>dadurch gekennzeichnet</u>, daß es darüberhinaus die folgenden Schritte beinhaltet:

a) Die Speicherung von M•(n+1) aufbereiteten Samples über eine Länge von M aufeinanderfolgenden Bits, die zu jedem Bitstrom gehören, in der folgenden Sequenz-Matrix [B] mit n+1 Zeilen und M Spalten:

$$[B] = \begin{bmatrix} B1 \\ B2 \\ \cdot \\ \cdot \\ \cdot \\ Bn+1 \end{bmatrix} = \begin{bmatrix} f1 & fn+1 & f2n+1 & ... & f(M-1)n+1 \\ f2 & fn+2 & f2n+2 & ... & f(M-1)n+2 \\ & & \cdot & & \\ & & \cdot & & \\ & & \cdot & & \\ fn+1 & f2n+1 & f3n+1 & ... & f(M.n)+1 \end{bmatrix}$$

b) Die Ermittlung und die Speicherung einer Spaltenmatrix [T] mit n Zeilen für die Signalwechsel (wobei das Zeichen $\oplus$ den Exclusive-OR-Operator darstellt):

$$[T] = \begin{bmatrix} t1 \\ t2 \\ \cdot \\ \cdot \\ \cdot \\ tn \end{bmatrix} = \begin{bmatrix} (f1 \oplus f2)+(fn+1 \oplus fn+2+...+(f(M-1)n+1 \oplus f(M-1)n+2) \\ (f2 \oplus f3)+(fn+2 \oplus fn+3)+...+(f(M-1)n+2 \oplus f(M-1)n+3) \\ \cdot \\ \cdot \\ \cdot \\ (fn \oplus fn+1)+(f2n \oplus f2n+1)+...+(fMn \oplus fMn+1) \end{bmatrix}$$

c) Die Berechnung von zwei Schwerpunktszahlen m1 und m2, die aus der Matrix [T] abgeleitet werden:
m1 = P1/Q1
m2 = P2/Q2

$$P1 = \sum_{i=1}^{n/2} i.ti \qquad P2 = \sum_{i=\frac{n}{2}+1}^{n} i.ti$$

$$Q1 = \sum_{i=1}^{n/2} ti \qquad Q2 = \sum_{i=\frac{n}{2}+1}^{n} ti$$

wobei i die Werte von 1 bis n durchläuft,

d) Die Berechnung einer aus den Zahlen m1 und m2 und der Matrix [T] abgeleiteten Zahl m:
m = m1•Q1 + m2•Q2/Q1+Q2        falls m2-m1 < n/2
m = (m1+n)•Q1 + m2•Q2/Q1+Q2        falls m2-m1 $\geqq$ n/2

e) Die Berechnung einer aus der Zahl m abgeleiteten ganzen Zahl m' wobei das Zeichen Int(..) bedeutet: ganzzahliger Anteil von (..):
m' = Int(m+0,5)

f) Die Berechnung einer aus den Zahlen m' und n abgeleiteten ganzen Zahl j zwischen 1 und n:
j = (m' - n/2) modulo n

g) Die Auswahl der Sequenz Bj als optimale Bit-Synchron-Sequenz der M Bits eines jeden empfangenen Binär-Impuls-Pakets, bzw. -Unter-Pakets.

Bit-Synchronisationsverfahren gemäß Anspruch 1, <u>dadurch gekennzeichnet</u>, daß die Zahl M ein ganzer Teiler der Gesamtanzahl von Bits in einem binären Impulspaket ist, wobei dies aus L aufeinanderfolgenden Unterpaketen mit der Länge M besteht, und daß die zum Unterpaket des Rangs k gehörende Sequenz $Bj_k$, wobei k zeitlich nacheinander für jedes Unterpaket die Werte von 1 bis L durchläuft, durch iterative Anwendung der folgenden Bearbeitungsschritte erreicht wird:

h) Berechnung und Speicherung der Zahl $m_k$:

$$m_k = \frac{(k-1)m_{k-1} + m_{(k)}}{k}$$

$m_{(k)}$ : Wert von m für das Unterpaket des Rangs k, den man durch Anwendung der obengenannten Schritte a) bis d) erhält,

i) Berechnung von jk durch Anwendung der obengenannten Schritte e) und f), wobei die Zahl m durch die Zahl mk ersetzt wird,

j) Auswahl der Sequenz Bjk als optimale Bit-Synchronisations-Sequenz der M Bits des Unterpakets vom Rang k für jeden Wert von k.

2. Bit-Synchronisationsverfahren gemäß Anspruch 1 oder 2 in einem Homodyn- oder Heterodyn-Funkempfänger, der durch ein Frequenzumtastverfahren (FSK) Pakete (oder Frames) von Binär-Impulsen vorgegebener, fester, kurzer Länge mit der Datenrate Fb empfängt, und bei dem das am Ausgang der End-Mischstufe anstehende Zwischenfrequenz-Signal Fi entsprechend dem beschriebenen ersten Schritt mit der Frequenz n•Fb so abgetastet wird, daß Abtastwerte x zur Verfügung stehen, wonach die genannten Abtastwerte x(f) in ihre sofortige Umkehrfunktion f(x) transformiert werden, die die charakteristische Frequenz der empfangenen 1- bzw. 0-Bits darstellt, und wonach die genannten Samples f(x) zu ihren jeweiligen Binärwerten 1 bzw. 0 aufbereitet werden.

3. Bit-Synchronisationsanordnung in einem Funkempfänger zwecks praktischer Anwendung des Verfahrens gemäß den Ansprüchen 1 und 3 zusammen, wobei M die Anzahl Bits in jedem empfangenen Binär-Impulspaket bezeichnet, und wobei die genannte Anordnung einen Analog-Digital-Wandler enthält, der die genannten Samples x mit der genannten Frequenz n•Fb liefert, wobei diese Anordnung <u>dadurch gekennzeichnet</u> ist, daß sie einen Steuer-Microprozessor und einen Rechen-Microprozessor enthält, daß der Steuer-Microprozessor programmiert ist, um dem Rechen-Microprozessor ein Frame-Synchronisationssignal zu liefern, und daß der genannte Rechen-Microprozessor programmiert ist, um den genannten zweiten Schritt auszuführen, bei dem die Abtastwerte zu standardisierten 1 und 0 Binärwerten aufbereitet werden, um die genannten Schritte a) bis g) durchzuführen, und um an seinem Ausgang die optimale Sequenz der genannten M Bits eines jeden Binär-Impulspaketes mit der Datenrate Fb zur Verfügung zu stellen.

4. Bit-Synchronisationsanordnung in einem Funkempfänger zwecks praktischer Anwendung des Verfahrens gemäß den Ansprüchen 1, 2 und 3 zusammen, wobei M die Anzahl Bits in jedem der L Unterpakete bezeichnet, wobei die genannte Anordnung einen Analog-Digital-Wandler enthält, der die genannten Samples x mit der genannten Frequenz n•Fb liefert, wobei diese Anordnung <u>dadurch gekennzeichnet</u> ist, daß sie einen Steuer-Microprozessor und einen Rechen-Microprozessor enthält, daß der Steuer-Microprozessor programmiert ist, um dem Rechen-Microprozessor ein Frame-Synchronisationssignal zu liefern, und daß der genannte Rechen-Microprozessor programmiert ist, um den genannten ersten Schritt zur Aufbereitung der Samples zu standardisierten 1 und 0 Binärwerten auszuführen, um für jedes Unterpaket die genannten Schritte a) bis d) und h) bis j) durchzuführen, und um an seinem Ausgang die optimale Sequenz der genannten M Bits eines jeden Unterpakets von Binär-Impulsen mit der Datenrate Fb zur Verfügung zu stellen.

5. Bit-Synchronisationsanordnung in einem Funkempfänger zwecks praktischer Anwendung des Verfahrens gemäß den Ansprüchen 1 und 3 zusammen, wobei M die Anzahl Bits in jedem der empfangenen Binär-Impulspakete bezeichnet, und wobei diese Anordnung hintereinandergeschaltet mit den folgenden Vorrichtungen ausgerüstet ist:
   - einem Demodulator für Digital-Signale durch Frequenzverschiebung (FSK-Verfahren),
   - Abtastmitteln zum Abtasten mit der Frequenz n•Fb zum Liefern der Abtastwerte f, die für die charakteristische Frequenz der empfangenen 1- bzw. 0-Bits repräsentativ sind, und
   - Signalaufbereitungsmitteln, die die Abtastwerte f jeweils in die entsprechenden standardisierten Binärwerte 1 oder 0 umwandeln,
<u>dadurch gekennzeichnet</u>, daß sie darüberhinaus die nachfolgenden Elemente enthält:
   - n+1 Schieberegister R1, R2, ... Rn, Rn+1, von denen die ersten n eine Speichertiefe von M+1 Bit besitzen, so daß sie die genannten n aufbereiteten Abtastwert-Sequenzen B1, B2, ... Bn aufnehmen können, und von denen das letzte mindestens eine Speichertiefe von 1 Bit aufweist,
- n Exclusive-OR-Gatter mit jeweils zwei Eingängen, auf die die genannten Eingangs-Samples der n+1 Schieberegister jeweils paarweise von jeweils zwei benachbarten Schieberegistern gelegt werden,
- n Zähler, die jeweils das Ausgangssignal von jedem der n Exclusive-OR-Gatter empfangen,
- einen Speicherbaustein mit wahlfreiem Zugriff, der über die Inhalte der n Zähler adressiert wird, n Ausgänge D1, D2, ... Dn besitzt und der als kundenspezifischer Schaltkreis so vorprogrammiert wird, daß jede Adreß-Konfiguration, die der genannten Signalwechsel-Matrix [T] entspricht, eine Speicherstelle anspricht, die die nach den obengenannten Schritten c) bis f) berechnete Zahl j enthält, und daß, je nach Inhalt dieser Speicherstelle, bei einer Leseanforderung stets nur der Ausgang Dj aktiviert wird,
- Auslesemittel dergestalt, daß abhängig von der Aktivierung des Ausgangs Dj und während der Haltezeit zwischen zwei aufeinanderfolgenden Paketen mit M Bits, die im Register Rj enthaltenen Bits mit hoher Geschwindigkeit ausgelesen werden, wobei diese Bits die optimale Sequenz der M Bits jedes empfangenen Binär-Impulspaketes darstellen.

## Claims

1. Bit synchronisation method, in a receiver, for packets of binary pulses, having a predetermined short length which carry digital information and being received in an asynchronous manner relative to the bit clock, at a rate Fb, and presenting detectable transitions between binary states, comprising a first step of sampling said pulse trains at the rate n.Fb, where n is a small even integer, a second step which consists of normalizing the samples x thus obtained, or samples f derived from the latter, into binary values 1 or 0, by comparing each sample to a predetermined threshold S, characterized in that it further includes the following steps:

a) storing over M successive bits belonging to each bit train of normalized samples, M.(n+1) normalized samples according to a sequence matrix [B] with (n+1) rows and M columns:

$$[B] = \begin{bmatrix} B1 \\ B2 \\ \vdots \\ Bn+1 \end{bmatrix} = \begin{bmatrix} f1 & fn+1 & f2n+1 & \dots & f(M-1)n+1 \\ f2 & fn+2 & f2n+2 & \dots & f(M-1)n+2 \\ \vdots & \vdots & \vdots & & \vdots \\ fn+1 & f2n+1 & f3n+1 & \dots & f(M.n)+1 \end{bmatrix}$$

b) determining and storing a transition column matrix [T] having n rows:

$$[T] = \begin{bmatrix} t1 \\ t2 \\ \vdots \\ tn \end{bmatrix} = \begin{bmatrix} (f1 \oplus f2)+(fn+1 \oplus fn+2)+\dots+(f(M-1)n+1 \oplus f(M-1)n+2) \\ (f2 \oplus f3)+(fn+2 \oplus fn+3)+\dots+(f(M-1)n+2 \oplus f(M-1)n+3) \\ \vdots \\ (fn \oplus fn+1)+(f2n \oplus f2n+1)+\dots+(fMn \oplus fMn+1) \end{bmatrix}$$

where $\oplus$ designates the Exclusive -OR operator,

c) calculating two barycentre numbers m1, m2, derived from the matrix [T]:

m1 = P1/Q1
m2 = P2/Q2

$$P1 = \sum_{i=1}^{n/2} i.ti \qquad P2 = \sum_{i=\frac{n}{2}+1}^{n} i.ti$$

$$Q1 = \sum_{i=1}^{n/2} ti \qquad Q2 = \sum_{i=\frac{n}{2}+1}^{n} ti$$

where i varies from 1 to n,

d) calculating a number m derived from the numbers m1, m2 and from the matrix [T]:

m = m1.Q1+m2.Q2/Q1+Q2     if: m2-m1 < n/2

m = (m1+n).Q1+m2.Q2/Q1+Q2     if: m2-m1 $\geqq$ n/2

e) calculating an integer m' derived from the number m while the notation E(.) denotes: integer part of ...:

m' = E(m+0.5)

f) calculating an integer j comprised between 1 and n, derived from the numbers m and n:

j = (m' - n/2)modulo-n

g) choosing the sequence Bj as an optimal sequence of said M bits of each packet or sub-packet respectively, of received binary pulses.

2. Bit synchronisation method as claimed in Claim 1, characterized in that the number M is a sub-multiple of the number of bits forming the length of a packet of binary pulses, the latter being constituted by L successive sub-packets of length M, in that the sequence $Bj_k$ relating to the sub-packet of rank k, where k varies chronologically from 1 to L for each sub-packet, is obtained by iteratively carrying out the following steps:

h) calculating and storing the number $m_k$:

$$m_k = \frac{(k-1)m_{k-1} + m_{(k)}}{k}$$

where $m_{(k)}$ is the value of m for the sub-packet of rank k obtained by performing said steps a) to d),

i) calculating $j_k$ by performing said steps e) and f) in which the number $m_k$ is substituted for the number m,

j) selecting the sequence $Bj_k$ as an optimal sequence of the M bits of the sub-packet of rank k, for each value of k.

3. Bit synchronisation method as claimed in Claim 1 or 2 in a homodyne or heterodyne radio receiver which receives, during digital transmission by means of frequency shift keying (FSK), packets (or frames) of binary pulses having a fixed predetermined short length at a bit rate Fb, according to which the intermediate frequency signal Fi obtained at the output of the final mixer is sampled in a first step at the rate n.Fb so as to produce samples x, after which the samples x(f) are transformed into their instantaneous inverse functions f(x) which represent the characteristic frequency of the received bits 1 and 0 respectively, after which said samples f(x) are normalized into binary values 1 or 0.

4. Bit synchronisation arrangement in a receiver for implementing the method as claimed in a combination of Claims 1 and 3, where M is equal to the number of bits of each received packet of binary pulses, said arrangement comprising an analog-to-digital converter for producing said samples x at said rate n.Fb, the arrangement being characterized in that it comprises a control microprocessor and a calculation microprocessor, in that the control microprocessor is programmed to supply to the calculation microprocessor a frame synchronisation signal and in that said calculation microprocessor is programmed to perform said second step which results in the conversion of samples into sorted binary values 1 or 0, to perform the steps a) to g) and to produce on an output at the rate Fb the optimal sequence of said M bits of each packet of binary pulses.

5. Bit synchronisation arrangement in a receiver for implementing the method as claimed in the combination of Claims 1, 2 and 3, where M is equal to the number of bits of each of the L sub-packets, said arrangement comprising an analog-to-digital converter for producing said samples x at the rate n.Fb, the arrangement being characterized in that it comprises a control microprocessor and a calculation processor, in that the control microprocessor is programmed to supply to the calculation microprocessor a frame-synchronisation signal, and in that said calculation microprocessor is programmed to perform said first step of sorting the samples into binary values 1 or 0, to perform for each sub-packet said steps a) to d), h) to j) and to produce on an output at the rate Fb the optimal sequence of said M bits of each sub-packet of binary pulses.

6. Bit synchronisation arrangement in a receiver for implementing the method as claimed in the combination of Claims 1 and 3, where M is equal to the number of bits of each received packet of binary pulses, said arrangement comprising in a cascade connection:
    - a digital frequency shift keying (FSR) signal demodulator,
    - sampling means operating at the rate n.Fb for producing samples f representing the characteristic frequency of the received 1 bits and O bits respectively,
    - and normalizing means for normalizing the samples f into binary values 1 or 0,

    characterized in that it further includes:
    - n+1 shift registers R1, R2,..., Rn, Rn+1 of which the n first registers have a length of M+1 bit locations to receive said n sequences B1, B2,..., Bn of normalized samples and whose last register has a length at least equal to one bit,
    - n Exclusive-OR gates having two inputs receiving in pairs the input samples of said n+1 shift registers for each pair of adjacent registers,
    - n counters receiving each the output signal of each of the n Exclusive-OR gates,
    - a random access memory addressed by the contents of the counters, having n outputs D1, D2, ..., Dn and previously programmed as a specific circuit, so that each addressing configuration identifying itself with said transition matrix [T] addresses a location containing the number j previously calculated according to said steps c) to f) and in a manner such that only output Dj is activated during a read command as a consequence of the specific contents of this location,
    - extracting means for extracting, as a consequence of the activation of output Dj, at a fast rate during a guard time separating two successive packets of M bits, the bits contained in the register Rj as an optimal sequence of said M bits of each received packet of binary pulses.

FIG.1

$$[B]_M = {n+1} \begin{bmatrix} B1 \\ B2 \\ \vdots \\ Bn+1 \end{bmatrix}$$ — 21

22

$$[T]^n_1$$ — 23

$$m_1 = P1 / Q1$$

$$m_2 = P2 / Q2$$ — 24

$$m_2 - m_1 \leqslant n/2$$ — 25

N Y

$$m = m_1 \cdot Q_1 + m_2 \cdot Q_2 / Q_1 + Q_2$$ — 26

$$m = (m_1 + n) Q_1 + m_2 \cdot Q_2 / Q_1 + Q_2$$

27

$$m' = E(m + 0,5)$$

$$j = (m' - n/2) \bmod n$$ — 28

29 — $Bj$

30

# FIG.2

FIG. 3